# EUROPÄISCHE PATENTSCHRIFT

(11) **EP 3 332 470 B1**
(45) Veröffentlichungstag und Bekanntmachung des Hinweises auf die Patenterteilung: **04.03.2020**
(21) Anmeldenummer: 16753268.8
(22) Anmeldetag: 27.07.2016
(51) Int. Cl.: H02K 9/06, H02K 17/16, H02K 5/18, H02K 1/32, H02K 11/33

(54) **LUFTGEKÜHLTER ELEKTROMOTOR MIT EINER PARALLELSCHALTUNG ZWEIER LÜFTERRÄDER**
AIR-COOLED ELECTRIC MOTOR WITH A PARALLEL CIRCUIT OF TWO FAN WHEELS
MOTEUR ÉLECTRIQUE REFROIDI PAR AIR AVEC MONTAGE PARALLÈLE DE DEUX HÉLICES DE VENTILATEUR

(30) Priorität: 06.08.2015 DE 102015215009
(43) Veröffentlichungstag der Anmeldung: 13.06.2018
(73) Patentinhaber: Vitesco Technologies GmbH, 30165 Hannover (DE)
(72) Erfinder: FRÖHLICH, Holger, 13127 Berlin (DE); CHARLES, David, 10553 Berlin (DE); KRAUSE, Robert, 10409 Berlin (DE); GREGER, Klaus, 10779 Berlin (DE)
(74) Vertreter: Waldmann, Georg Alexander
(86) Internationale Anmeldenummer: PCT/EP2016/067860
(87) Internationale Veröffentlichungsnummer: WO 2017/021244

(56) Entgegenhaltungen:
- EP-A2- 0 238 080
- DE-A1-102011 087 273
- DE-A1-102014 225 588
- JP-A- 2011 035 961
- JP-Y1- S5 043 684

## Beschreibung

Die Erfindung betrifft einen luftgekühlten Elektromotor, insbesondere einen Riemenstartergenerator mit einem Riemenspanner, einem an dem Elektromotor angebauten oder in ein Motorgehäuse bzw. Lagerschild des Elektromotors integrierten Invertergehäuse für eine Leistungs-, Ansteuer- und Regelelektronik (Inverter) und mit einem motoreigenen Lüftersystem.

Für elektrisch betriebene Fahrzeuge und für teilweise elektrisch betriebene Fahrzeuge mit Hybridmotor bzw. bei einem Einsatz eines Riemenstartergenerators ist eine Vorrichtung zum Spannen eines Keilrippenriemens, ein sogenannter Riemenspanner, notwendig, welcher platzsparend direkt am Gehäuse der Abtriebseite bzw. an der Festlagerseite angebaut sein kann. Diesbezüglicher technologischer Hintergrund ist beispielsweise aus der DE 10 2011 080 886 A1, DE 10 2013 109 294 A1 und der EP 1929611 B1 bekannt. Der Riemenspanner kann jedoch eine Barriere für das Ansaugen von Kühlluft darstellen, da er eine mögliche Kühlmittelzuführung über das Gehäuse bzw. Schlitze in einem Lagerschild verschließen kann.

Aus der DE 10 2014 225 588 A1, JP 2011 035 961 A und DE 10 2011 087 273 A1 ist jeweils eine elektrische Maschine mit einem Rotor bekannt, wobei an den axialen Stirnseiten des Rotors jeweils ein Lüfterrad angeordnet ist.

Die EP 0 238 080 A2 beschreibt eine elektrische Maschine, bei der ein erstes Lüfterrad Umgebungsluft ansaugt und einen ersten Teil der angesaugten Umgebungsluft in radialer Richtung ausbläst. Ein zweites Lüfterrad saugt einen zweiten Teil der von dem ersten Lüfterrad angesaugten Umgebungsluft durch einen Rotor der elektrischen Maschine an und bläst diesen in radialer Richtung aus.

Die Aufgabe der Erfindung liegt daher darin, einen luftgekühlten Elektromotor der eingangs genannten Art bereitzustellen, mittels welchem eine besonders wirksame Kühlung des Gesamtaggregats in platzsparender Weise erfolgen kann, und der eine erhöhte Robustheit aufweisen kann.

Die Aufgabe wird gelöst durch die Gegenstände der unabhängigen Patentansprüche. Vorteilhafte Ausführungsformen sind Gegenstand der abhängigen Ansprüche, der folgenden Beschreibung sowie der Figuren.
Der erfindungsgemäße luftgekühlte Elektromotor umfasst einen auf einer Festlagerseite des Elektromotors angebrachten Riemenspanner, ein auf einer Loslagerseite des Elektromotors angeordnetes Invertergehäuse und ein Lüftersystem mit einem loslagerseitigen ersten Lüfterrad und einem festlagerseitigen zweiten Lüfterrad.

Das erste Lüfterrad ist dazu eingerichtet, einen kühlenden Luft-Volumenstrom aus der Umgebung des Elektromotors radial nach innen über Kühlrippen eines loslagerseitigen Lagerschilds, welches axial benachbart zu dem Invertergehäuse angeordnet ist, anzusaugen und einen ersten Anteil des angesaugten Luft-Volumenstroms radial nach außen über einen loslagerseitigen Stator-Wickelkopf aus dem Elektromotor zu blasen. Das zweite Lüfterrad ist dazu eingerichtet, einen zweiten Anteil des radial nach innen angesaugten Luft-Volumenstroms axial in und durch einen Rotor, insbesondere über Luftkanäle eines Rotor-Blechpakets des Rotors, anzusaugen und radial nach außen über einen festlagerseitigen Stator-Wickelkopf aus dem Elektromotor zu blasen.

Die "Festlagerseite" des Elektromotors bzw. "festlagerseitig" bezieht sich in diesem Zusammenhang insbesondere auf diejenige Seite, auf welcher ein erster axialer Endabschnitt des Elektromotors angeordnet ist, wobei der genannte erste Endabschnitt, z.B. ein erster axialer Endabschnitt eines Motorgehäuses oder ein erster Lagerschild, ein axiales Festlager aufnimmt.

Die "Loslagerseite" des Elektromotors bzw. "loslagerseitig" hingegen bezieht sich insbesondere auf diejenige Seite, auf welcher ein zweiter axialer Endabschnitt des Elektromotors angeordnet ist, wobei der genannte zweite Endabschnitt, z.B. ein zweiter axialer Endabschnitt eines Motorgehäuses oder ein zweiter Lagerschild, ein axiales Loslager aufnimmt.

Der erfindungsgemäße luftgekühlte Elektromotor weist somit eine Parallelschaltung zweier Lüfterräder auf, wobei das erste Lüfterrad ein ausschließlich radiales Ansaugen von Kühlluft ermöglicht. Dadurch ist es nicht hinderlich, dass der Riemenspanner eventuell eine Barriere für ein axiales Ansaugen von Luft über die Festlagerseite darstellt. Durch die Möglichkeit, auf der Loslagerseite bzw. Inverterseite radial anzusaugen, können Schlitze, Durchbrüche oder ähnliches zum axialen Ansaugen im Gehäuse oder Lagerschild auf der Festlagerseite entfallen. Dadurch kann die mechanische Stabilität des Gehäuses bzw. Lagerschilds erhöht werden. Mit anderen Worten ist es nicht erforderlich, den Querschnitt des Gehäuses bzw. Lagerschilds rund um den Gehäuselagersitz auf der Festlagerseite zu schwächen, was auch für das Festlager eine höhere Lagersteifigkeit mit sich bringt.

Da der loslagerseitige Lagerschild axial benachbart zu dem Invertergehäuse angeordnet ist, können insbesondere ein in dem Invertergehäuse aufgenommener Inverter, der loslagerseitige Wickelkopf, der Rotor und der festlagerseitige Wickelkopf von einem offenen, parallelen Kühlkreislauf gekühlt werden.

Unter einem "offenen" Kühlkreislauf ist dabei zu verstehen, dass ein Lufteinlass des Kühlkreislaufs zum Ansaugen des kühlenden Luft-Volumenstroms aus der Umgebung und ein Luftauslass des Kühlkreislaufs zum Ausblasen des erwärmten Luft-Volumenstroms an die Umgebung nicht miteinander verbunden sind. Unter einem "parallelen" Kühlkreislauf ist dabei zu verstehen, dass sich der angesaugte kühlende Luft-Volumenstrom in zwei Teil-Volumenströme aufteilt, welche durch den ersten und den zweiten Anteil des Luft-Volumenstroms gebildet werden.
Mit anderen Worten ermöglicht der offene, parallele Kühlkreislauf, dass in einem ersten der parallelen Kreisläufe nach einer Kühlung des Inverters bzw. des Invertergehäuses im saugenden Betrieb der Stator-Wickelkopf auf der Loslagerseite gekühlt wird. In einem zweiten der parallelen Kreisläufe wird nach der Kühlung des Inverters bzw. des Invertergehäuses im saugenden Betrieb der Rotor und dann der Stator-Wickelkopf der Festlagerseite gekühlt.

Vorzugsweise sind das erste Lüfterrad und das zweite Lüfterrad an Kurzschlussringen des Rotors angeformt. Unter "angeformt" ist in diesem Zusammenhang insbesondere zu verstehen, dass die Lüfterräder jeweils in einen Kurzschlussring des Rotors integriert sind, das heißt der jeweilige Kurzschlussring und das jeweilige Lüfterrad sind einteilig miteinander verbunden. Dies ermöglicht eine Gewichtsreduzierung und einen geringeren Fertigungsaufwand.

Gemäß einer Ausführungsform sind das erste Lüfterrad und das zweite Lüfterrad baugleich. Bei einem Parallelbetrieb der zwei baugleichen Lüfterräder kann eine Verdoppelung des geförderten Luft-Volumenstroms erreicht werden. Das bedeutet, dass ein doppelter Luftdurchsatz entlang der Kühlrippen des Lagerschilds und entlang der Innenseite des Invertergehäuses bei gleichem Luftdurchsatz zur Kühlung pro Wickelkopf erreicht werden kann.

Weiterhin ist vorteilhaft vorgesehen, dass eine Luftleitbuchse auf einer Rotorwelle zwischen den Kühlrippen des loslagerseitigen Lagerschilds und dem ersten Lüfterrad angeordnet ist. Die Laufleitbuchse kann schaufellos oder beschaufelt ausgeführt sein. Die Luftleitbuchse ermöglicht eine besonders zielgerichtete, effektive und effiziente Leitung der Luft von den Kühlrippen in Richtung der Kanäle des Rotors und in Richtung von Schaufeln der Laufräder.
Gemäß einer weiteren Ausführungsform ist weiterhin vorgesehen, dass zwischen dem ersten Lüfterrad und dem ersten Lagerschild ein im Querschnitt L-förmiges Luftleitblech angeordnet ist, welches den ersten Anteil des angesaugten Luft-Volumenstroms besonders effizient über den loslagerseitigen Stator-Wickelkopf leitet. Zudem dient das Luftleitblech als feststehende Gehäusehälfte bzw. als Deckscheibe des Lüfterrads und vermeidet einen Kurzschlussstrom durch den Kühlkörper im Inneren des Elektromotors.

Im Folgenden werden Ausführungsbeispiele der Erfindung anhand der Zeichnung näher erläutert. Hierbei zeigt
- Fig. 1: eine perspektivische Längsschnitt-Darstellung eines bekannten luftgekühlten Elektromotors,
- Fig. 2: eine Längsschnitt-Darstellung eines Ausführungsbeispiels eines erfindungsgemäßen luftgekühlten Elektromotors,
- Fig. 3: den Elektromotor nach Fig. 2 in einer Explosionsdarstellung und
- Fig. 4: einen Schaltplan der Lüfterräder des Elektromotors nach Fig. 1.

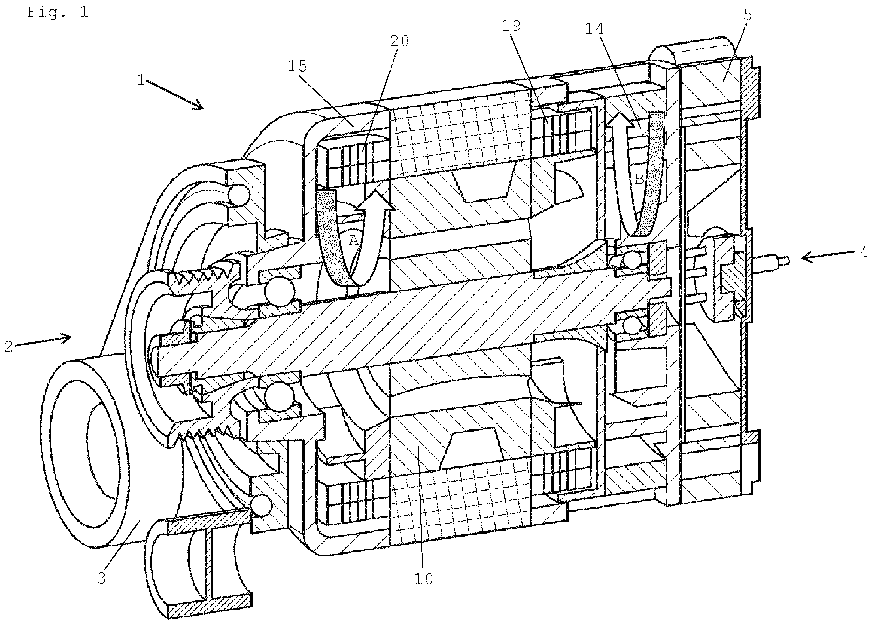

Fig. 1 zeigt einen luftgekühlten Elektromotor 1, welcher einen auf einer Festlagerseite 2 des Elektromotors 1 angebrachten Riemenspanner 3, und ein auf einer Loslagerseite 4 des Elektromotors 1 angeordnetes Invertergehäuse 5 umfasst. Der Elektromotor 1 umfasst weiterhin einen loslagerseitigen ersten Lagerschild 14 und einen festlagerseitigen zweiten Lagerschild 15. Mittels zweier Kühlkreisläufe A und B werden insbesondere ein Rotor 10 des Elektromotors 1, das Invertergehäuse 5, sowie Stator-Wickelköpfe 19, 20 eines Stators 18 des Elektromotors 1 gekühlt.

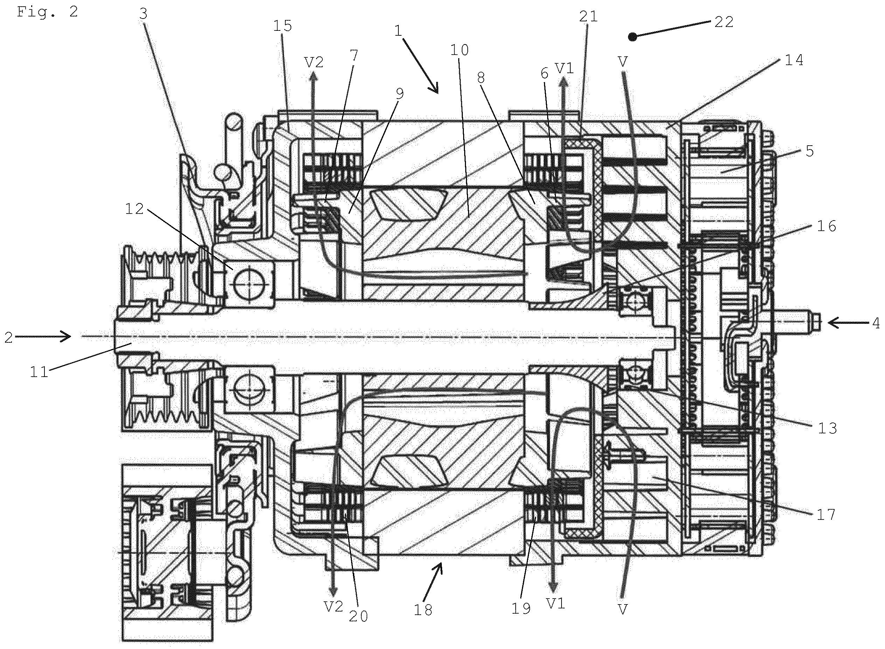

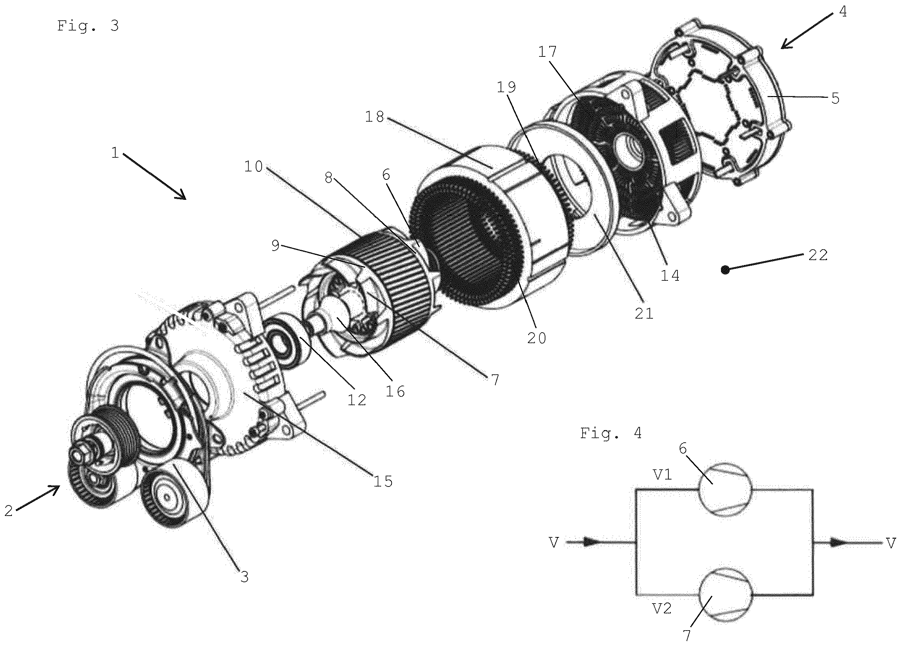

Fig. 2 und 3 zeigen einen luftgekühlten Elektromotor 1, welcher einen auf einer Festlagerseite 2 des Elektromotors 1 angebrachten Riemenspanner 3, ein auf einer Loslagerseite 4 des Elektromotors 1 angeordnetes Invertergehäuse 5 und ein Lüftersystem mit einem loslagerseitigen ersten Lüfterrad 6 und einem festlagerseitigen zweiten Lüfterrad 7 umfasst.

Das erste Lüfterrad 6 und das zweite Lüfterrad 7 sind baugleich und jeweils an einem loslagerseitigen Kurzschlussring 8 bzw. einem festlagerseitigen Kurzschlussring 9 eines Rotors 10 angeformt. Der Rotor 10 ist drehfest auf einer durch Fig 1 gezeigten Rotorwelle 11 gelagert. Die Rotorwelle 11 ist drehbar in einem Festlager 12 und einem Loslager 13 gelagert. Das Loslager 13 ist auf der Seite des Invertergehäuses 5 axial beweglich in einem ersten Lagerschild 14 gelagert, welches axial benachbart zu dem Invertergehäuse 5 angeordnet ist, oder in einteiliger Ausführung (Kühlkörper-, Lager- und Inverterträger) einen Teil des Invertergehäuses darstellt. Das Festlager 12 ist auf der Seite des Riemenspanners 3 in einem zweiten Lagerschild 15 axial fixiert gelagert. Weiterhin ist eine Luftleitbuchse 16 auf der Rotorwelle 11 zwischen Kühlrippen 17 des loslagerseitigen ersten Lagerschilds 14 und dem ersten Lüfterrad 6 angeordnet.

Ein Stator 18 ist zwischen dem ersten Lagerschild 14 und dem zweiten Lagerschild 15 unbeweglich angeordnet und umgibt den Rotor 10. Der Stator 18 umfasst einen loslagerseitigen Stator-Wickelkopf 19 und einen festlagerseitigen Stator-Wickelkopf 20, wobei die Stator-Wickelköpfe 19 und 20 an entgegengesetzten Endbereichen des Stators 18 angeordnet sind und von jeweils einem der Lagerschilde 14 bzw. 15 radial umgeben sind. Zwischen dem ersten Lüfterrad 6 und dem ersten Lagerschild 14 ist weiterhin ein im Querschnitt L-förmiges Luftleitblech 21 angeordnet.

Mittels des ersten Lüfterrads 6 kann ein kühlender Luft-Volumenstrom V aus der Umgebung 22 des Elektromotors 1 radial nach innen über die Kühlrippen 17 des loslagerseitigen Lagerschilds 14 und die Luftleitbuchse 16 angesaugt werden. Ein erster Anteil V1 des angesaugten Luft-Volumenstroms V kann radial nach außen über den loslagerseitigen Stator-Wickelkopf 19 aus dem Elektromotor 1 geblasen werden, wobei der erste Anteil V1 des Luft-Volumenstroms V mittels des Luftleitblechs 21 entsprechend geleitet wird. Mittels des zweiten Lüfterrads 7 kann ein zweiter Anteil V2 des radial nach innen angesaugten Luft-Volumenstroms V axial in und durch den Rotor 10 angesaugt werden und radial nach außen über den festlagerseitigen Stator-Wickelkopf 20 aus dem Elektromotor 1 geblasen werden.

Fig. 4 veranschaulicht die Aufteilung des aus der Umgebung 22 des Elektromotors 1 angesaugten Luft-Volumenstroms V in einen ersten Anteil V1 und einen zweiten Anteil V2 mittels des ersten Lüfterrads 6 bzw. des zweiten Lüfterrads 7, wobei beide Anteile V1 und V2 wieder an die Umgebung 22 abgegeben werden.

## Patentansprüche

1. Luftgekühlter Elektromotor (1) umfassend
einen loslagerseitigen ersten Lagerschild (14) und einen festlagerseitigen zweiten Lagerschild (15),
einen auf einer Festlagerseite (2) des Elektromotors (1) angebrachten Riemenspanner (3),
ein auf einer Loslagerseite (4) des Elektromotors (1) angeordnetes Invertergehäuse (5) und
ein Lüftersystem mit einem loslagerseitigen ersten Lüfterrad (6) und einem festlagerseitigen zweiten Lüfterrad (7),
wobei
das erste Lüfterrad (6) dazu eingerichtet ist, einen kühlenden Luft-Volumenstrom (V) aus der Umgebung (22) des Elektromotors (1) radial nach innen über Kühlrippen (17) eines loslagerseitigen Lagerschilds (14), welches axial benachbart zu dem Invertergehäuse (5) angeordnet ist, anzusaugen und einen ersten Anteil (V1) des angesaugten Luft-Volumenstroms (V) radial nach außen über einen loslagerseitigen Stator-Wickelkopf (19) aus dem Elektromotor (1) zu blasen, und wobei
das zweite Lüfterrad (7) dazu eingerichtet ist, einen zweiten Anteil (V2) des radial nach innen angesaugten Luft-Volumenstroms (V) axial in und durch einen Rotor (10) anzusaugen und radial nach außen über einen festlagerseitigen Stator-Wickelkopf (20) aus dem Elektromotor (1) zu blasen, wobei
der festlagerseitige zweite Lagerschild (15) frei von Durchbrüchen zum axialen Ansaugen von Umgebungsluft ist.

2. Luftgekühlter Elektromotor (1) nach Anspruch 1, **dadurch gekennzeichnet, dass** das erste Lüfterrad (6) und das zweite Lüfterrad (7) an Kurzschlussringen (8, 9) angeformt sind.

3. Luftgekühlter Elektromotor (1) nach Anspruch 1 oder 2, **dadurch gekennzeichnet, dass** das erste Lüfterrad (6) und das zweite Lüfterrad (7) baugleich sind.

4. Luftgekühlter Elektromotor (1) nach einem der vorstehenden Ansprüche, **dadurch gekennzeichnet, dass** eine Luftleitbuchse (16) auf einer Rotorwelle (11) zwischen den Kühlrippen (17) des loslagerseitigen Lagerschilds (14) und dem ersten Lüfterrad (6) angeordnet ist.

5. Luftgekühlter Elektromotor (1) nach einem der vorstehenden Ansprüche, **dadurch gekennzeichnet, dass** zwischen dem ersten Lüfterrad (6) und dem ersten Lagerschild (14) ein im Querschnitt L-förmiges Luftleitblech (21) angeordnet ist.

## Claims

1. Air-cooled electric motor (1) comprising
a floating bearing-side first end plate (14) and a fixed bearing-side second end plate (15),
a belt tensioner (3) which is fitted on a fixed bearing side (2) of the electric motor (1),
an inverter housing (5) which is arranged on a floating bearing side (4) of the electric motor (1), and
a fan system having a floating bearing-side first fan impeller (6) and a fixed bearing-side second fan impeller (7),
wherein
the first fan impeller (6) is designed to draw a cooling air volume flow (V) radially inward from the area (22) surrounding the electric motor (1) via cooling ribs (17) of a floating bearing-side end plate (14) which is arranged axially adjacent to the inverter housing (5) and to blow a first proportion (V1) of the drawn-in air volume flow (V) radially outward out of the electric motor (1) via a floating bearing-side stator end winding (19), and wherein
the second fan impeller (7) is designed to draw a second proportion (V2) of the radially inwardly drawn air volume flow (V) axially into and through a rotor (10) and to blow it radially outward out of the electric motor (1) via a fixed bearing-side stator end winding (20), wherein
the fixed bearing-side second end plate (15) is free of apertures for axially drawing in ambient air.

2. Air-cooled electric motor (1) according to Claim 1, **characterized in that** the first fan impeller (6) and the second fan impeller (7) are integrally formed on short-circuiting rings (8, 9).

3. Air-cooled electric motor (1) according to Claim 1 or 2, **characterized in that** the first fan impeller (6) and the second fan impeller (7) are structurally identical.

4. Air-cooled electric motor (1) according to one of the preceding claims, **characterized in that** an air guide sleeve (16) is arranged on a rotor shaft (11) between the cooling ribs (17) of the floating bearing-side end plate (14) and the first fan impeller (6).

5. Air-cooled electric motor (1) according to one of the preceding claims, **characterized in that** an air guide plate (21) which has an L-shaped cross section is arranged between the first fan impeller (6) and the first end plate (14).

## Revendications

1. Moteur électrique à refroidissement par air (1) comprenant
un premier flasque côté palier libre (14) et un deuxième flasque côté palier fixe (15),
un tendeur de courroie (3) monté sur un côté palier fixe (2) du moteur électrique (1),
un boîtier d'inverseur (5) disposé sur un côté palier libre (4) du moteur électrique (1) et
un système ventilateur comprenant une première roue de ventilateur côté palier libre (6) et une deuxième roue de ventilateur côté palier fixe (7),
la première roue de ventilateur (6) étant adaptée pour aspirer un flux volumique d'air de refroidissement (V) allant de l'environnement (22) du moteur électrique (1) radialement vers l'intérieur par le biais de nervures de refroidissement (17) d'un flasque côté palier libre (14) qui est axialement adjacent au boîtier d'inverseur (5) et pour souffler une première partie (V1) du flux volumique d'air aspiré (V) du moteur électrique (1) radialement vers l'extérieur par le biais d'une tête d'enroulement de stator côté palier libre (19), et
la deuxième roue de ventilateur (7) étant adaptée pour aspirer une deuxième partie (V2) du flux volumique d'air aspiré (V) du moteur électrique (1) radialement vers l'intérieur axialement dans et à travers un rotor (10) et radialement vers l'extérieur par le biais d'une tête d'enroulement de stator côté palier fixe (20),
le deuxième flasque côté palier fixe (15) étant dépourvu de passages destinés à l'aspiration axiale de l'air d'environnement.

2. Moteur électrique à refroidissement par air (1) selon la revendication 1, **caractérisé en ce que** la première roue de ventilateur (6) et la deuxième roue de ventilateur (7) sont formées sur des bagues de court-circuit (8, 9).

3. Moteur électrique à refroidissement par air (1) selon la revendication 1 ou 2, **caractérisé en ce que** la première roue de ventilateur (6) et la deuxième roue de ventilateur (7) sont identiques.

4. Moteur électrique à refroidissement par air (1) selon l'une des revendications précédentes, **caractérisé en ce qu'**une douille de guidage d'air (16) est disposée sur un arbre de rotor (11) entre les nervures de refroidissement (17) du flasque côté palier lisse (14) et la première roue de ventilateur (6).

5. Moteur électrique à refroidissement par air (1) selon l'une des revendications précédentes, **caractérisé en ce qu'**une tôle de guidage d'air (21) en forme de L en coupe transversale est disposée entre la première roue de ventilateur (6) et le premier flasque (14).
